# EUROPÄISCHE PATENTSCHRIFT

(11) **EP 1 386 652 B1**
(45) Veröffentlichungstag und Bekanntmachung des Hinweises auf die Patenterteilung: **27.08.2008**
(21) Anmeldenummer: 03014376.2
(22) Anmeldetag: 26.06.2003
(51) Int. Cl.: B01D 46/04, B01D 46/24

(54) **Vorrichtung zur Reinigung von Schlauchfiltern und Transportcontainer mit dieser Vorrichtung**
Device for cleaning tube filters and a transport container with this device
Dispositif pour nettoyer des filtres à manche et un conteneur avec ce dispositif

(30) Priorität: 31.07.2002 DE 20211827 U
(43) Veröffentlichungstag der Anmeldung: 04.02.2004
(73) Patentinhaber: Wallstein Ingenieur-Gesellschaft mbH, 45667 Recklinghausen (DE)
(72) Erfinder: Wallstein, Dieter, 44795 Bochum (DE)
(74) Vertreter: Griepenstroh, Jörg

(56) Entgegenhaltungen:
- EP-A- 0 552 454
- EP-A- 0 719 577
- WO-A-01/68220
- DE-A- 10 027 320
- GB-A- 2 304 600

## Beschreibung

Die Erfindung betrifft eine Vorrichtung zur äußeren Nassreinigung von Schlauchfiltern nach den Merkmalen des Schutzanspruchs 1 sowie einen Transportcontainer mit einer solchen Vorrichtung.

In Rauchgasreinigungsanlagen kommen Schlauchfilter zum Einsatz. Diese werden von außen durch Rauchgas angeströmt, wobei sich die abzuscheidenden Partikel am Außenumfang der Schlauchfilter absetzen. Das gereinigte Gas wird durch das Innere der Schlauchfilter abgezogen. Nach einer bestimmten Zeit müssen die Schlauchfilter gereinigt werden, da durch zunehmende Ablagerung der Partikel der durch die Schlauchfilter entstehende Druckverlust zu hoch wird und die nachgeschalteten Ventilatoren bzw. der Saugzug nicht mehr ausreicht, um die erhöhte Druckdifferenz zu überwinden.

Die Schlauchfilter können dann entweder ausgetauscht und komplett durch neue Schlauchfilter ersetzt werden oder aber einem Reinigungsvorgang unterzogen werden.

Bekannte Reinigungsverfahren sehen die Trockenreinigung, beispielsweise mittels einer Rütteleinrichtung, einer Walzvorrichtung oder aber mittels Luftdruckstössen vor. Bei der ebenfalls bekannten Nassreinigung werden die Schlauchfilter in aller Regel ausgebaut und in langen Trögen gewaschen und anschließend getrocknet. Der Waschvorgang kann auch durch einen Hochdruckreiniger oder ganz einfach mit einem Wasserschlauch erfolgen. Die Nassreinigung hat den Vorteil, dass ein höherer Reinigungsgrad erreicht werden kann, wobei die gereinigten Schlauchfilter eine Durchlässigkeit von 60 - 75 % aufweisen. Im Ausgangszustand, also im neuen Zustand haben die Schlauchfilter eine Durchlässigkeit von ca. 100 %. Mit den bekannten Trockenreinigungsverfahren kann eine Durchlässigkeit von ca. 40 % erreicht werden.

Aus der DE 100 27 320 A1 ist ein Abreinigungssystem für Gewebefilterschläuche bekannt, bei welchem durch Nassreinigung die Gewebefilterschläuche linienförmig und unidirektional von der Reingasseite zur Rohgasseite hin gewaschen und in einem Durchgang mittels Heißluft getrocknet werden. Hierzu wird der verschmutzte Filterschlauch durch den Ringspalt zwischen einem innen geführten Waschflüssigkeitszuleitungskopf und einem auf etwa gleicher Höhe außen geführten ringförmigen Absaugkopf hindurch gezogen. Dieser Nassreinigung ist eine Trocknungsstrecke mit Zufuhr von Warmluft und anschließender Absaugung nachgeschaltet.

Obwohl dieses, wie auch die anderen bekannten Nassreinigungsverfahren bereits gute Reinigungserfolge erzielen, sind sie jedoch mit dem Nachteil behaftet, dass das Gewebe des Schlauchfilters vollständig durchnässt wird. Hieraus resultieren dann wesentlich längere Trocknungszeiten, die nur durch zusätzliche aufwendige Trocknungsmaßnahmen verkürzt werden können.

Hiervon ausgehend liegt der Erfindung die Aufgabe zugrunde, eine Vorrichtung zur Nassreinigung von Schlauchfiltern bereitzustellen, mit welcher ein vollständiges Durchnässen des Filtergewebes vermieden wird und welche gleichzeitig eine rasche Trocknung ermöglicht.

Als weitere Aufgabe soll eine Möglichkeit aufgezeigt werden, eine solche Vorrichtung zur Nassreinigung möglichst mobil einzusetzen.

Die Erfindung löst diese Aufgaben durch die Merkmale der Schutzansprüche 1 und 16.

Der wesentliche Vorteil der erfindungsgemäßen Vorrichtung ist darin zu sehen, dass nicht das gesamte Gewebe des Schlauchfilters für eine Reinigung durchnässt werden muss, sondern nur seine äußere Oberfläche mit Reinigungsflüssigkeit in Kontakt kommt. Um den Zutritt von Reinigungsflüssigkeit in das Innere des Schlauchfilters zu verhindern ist es vorgesehen, den Schlauchfilter insgesamt mit Innendruck zu beaufschlagen. Die Nassreinigung erfolgt ausschließlich an seiner äußeren Oberfläche, so dass die in der DE 100 27 320 A1 beschriebene Problematik der Salzkrustenbildung an der inneren Oberfläche des Schlauchfilters gelöst ist.

Als vorteilhaft hat es sich gezeigt, wenn die von der Blasvorrichtung in den Schlauchfilter eingeblasene Luft eine Temperatur besitzt, die höher als die Temperatur der Umgebungsluft ist (Schutzanspruch 2). Die Temperaturen können hierbei im Bereich von etwa 20° C bis etwa 70° C liegen (Schutzanspruch 3). Dadurch ist es möglich, Schlauchfilter unmittelbar nach der äußeren Nassreinigung bis zu einem bestimmten Restfeuchtegehalt intensiv zu trocknen.

Nach den Merkmalen des Schutzanspruchs 4 ist jeder Schlauchfilter in dem Aufnahmebehälter horizontal auf einem mit Ablauföffnungen versehenen Auflager gelagert, dass vorzugsweise aus sich in Längsrichtung des Schlauchfilters erstreckenden Stäben gebildet ist (Schutzanspruch 5). Zwischen den im Abstand zueinander verlaufenden Stäben sind die Ablauföffnungen maximal bemessen, so dass auch größere, bei der Nassreinigung entfernte Filterkuchenstücke problemlos durch die Ablauföffnungen von den Schlauchfiltern entfernt werden können.

Eine im Querschnitt muldenförmige Konfiguration jedes Auflagers trägt zur zusätzlichen Lageorientierung der Schlauchfilter bei, so dass diese auch unter dem Einfluss der Nassreinigung die ihnen zugedachte Position beibehalten (Schutzanspruch 6).

Die Nassreinigung selbst erfolgt über wenigstens eine, gegenüber dem Schlauchfilter relativ beweglich angeordnete und auf dessen äußere Oberfläche gerichtete Reinigungsdüse (Schutzanspruch 7). Der zu reinigende und mit Innendruck beaufschlagte Schlauchfilter ist während des gesamten Reinigungsvorgangs innerhalb des Aufnahmebehälters lageorientiert, wobei die Reinigungsdüse grundsätzlich beliebige Relativbewegungen gegenüber dem Schlauchfilter ausführt. Die Relativbewegungen können sowohl translatorisch in Richtung oder quer zur Längsachse des Schlauchfilters als auch um die Längsachse rotierend erfolgen. Selbstverständlich ist auch eine Kombination von translatorischer und rotatorischer Bewegung, gegebenenfalls bei gleichzeitiger Oszillation, möglich.

Als wesentlich wird es dabei angesehen, dass ein aus einer Reinigungsdüse austretender Reinigungsstrahl nicht senkrecht auf die äußere Oberfläche des Schlauchfilters trifft, sondern in einem Winkel ungleich 90°. Dies hat zum einen den Vorteil, dass fest anhaftende Filterkuchen durch das schräge Auftreffen gewissermaßen von der äußeren Oberfläche des Schlauchfilters abgeschält werden, da der Reinigungsstrahl zwischen die äußere Oberfläche des Schlauchfilters und den Filterkuchen dringt. Zudem ist der, beim Auftreffen auf die äußere Oberfläche entstehende Staudruck des Reinigungsstrahls bei schrägem Auftreffen geringer, so dass es bei unveränderten dynamischen Drücken und gleichzeitig verbesserter Reinigungswirkung weitestgehend ausgeschlossen ist, dass Reinigungsflüssigkeit in das Innere des Schlauchfilters gelangt.

Nach den Merkmalen des Schutzanspruchs 8 ist die Reinigungsdüse an einem in Längsrichtung des Schlauchfilters verfahrbaren Reinigungsschlitten angeordnet. Hierbei kann es sich selbstverständlich um mehrere Reinigungsdüsen handeln, die derart angeordnet sind, dass ein bestimmter Umfangsbereich des Schlauchfilters bei einem vollständigen Verfahren in Längsrichtung gereinigt wird. Wenn bei jedem Arbeitsgang, beispielsweise 1/3 des Umfangsbereichs des Schlauchfilters über die gesamte Länge gereinigt wird, ist es lediglich erforderlich, zwei weitere Reinigungsvorgänge anzuschließen und die Schlauchfilter jeweils um 120° um die Längsachse zu drehen.

Vorteilhaft können die Reinigungsdüsen aber auch über den gesamten Umfang des Schlauchfilters verteilt angeordnet sein, wie dies nach den Merkmalen des Schutzanspruchs 9 beabsichtigt ist. Dies ist insbesondere dann möglich, wenn die Auflager in den Aufnahmebehältern als sich in Längsrichtung des Schlauchfilters erstreckende Stäbe ausgebildet sind, so dass der Reinigungsschlitten ohne Hindernisse über die gesamte Länge des Schlauchfilters verfahrbar ist.

Es ist aber auch möglich, ein Auflager nur an einer Längsseite in dem Aufnahmebehälter zu befestigen, so dass das gesamte Auflager unter Aussparung der erforderlichen Befestigung von dem Reinigungsschlitten umgriffen wird. Bei dieser Konfiguration können auch andersartig gestaltete Auflager zum Einsatz kommen.

Die umfangsseitige Verteilung der Reinigungsdüsen kann zweckmäßigerweise in einer Radialebene liegen. Eine solche kreisförmige Anordnung der Reinigungsdüsen ist Gegenstand des Schutzanspruchs 10.

Es ist im Rahmen der Erfindung aber auch denkbar, die Reinigungsdüsen in Längsrichtung versetzt umfangsseitig verteilt anzuordnen. Selbstverständlich können auch mehrere Reihen von Reinigungsdüsen hintereinander geschaltet an dem Reinigungsschlitten vorgesehen sein, um beispielsweise die äußeren Oberflächenbereiche aus zwei unterschiedlichen Winkeln mit Reinigungsstrahlen zu bearbeiten, um auf diese Weise besonders fest anhaftende Filterkuchen lösen zu können bzw. in allgemeiner Weise die Reinigungswirkung zu verbessern.

Zur Sicherstellung einer gleichmäßigen Relativbewegung ist der Reinigungsschlitten gegenüber den Schlauchfiltern an Laufschienen geführt. Diese können vorteilhaft an den Seitenwänden des Aufnahmebehälters angeordnet sein (Schutzanspruch 11). Insbesondere können die Seitenwände des Aufnahmebehälters an ihren oberen Längskanten mit geeigneten Laufschienen versehen sein.

Nach Schutzanspruch 12 ist vorgesehen, dass an die Blasvorrichtung wenigstens zwei Schlauchfilter gleichzeitig anschließbar sind, wobei einzelne Schlauchfilter mittels Leiteinrichtungen gezielt mit Innendruck beaufschlagbar sind. Insbesondere in den Ausführungsformen der Schutzansprüche 13 und 14, wonach parallel zueinander angeordnete Aufnahmebehälter zur Aufnahme von je zwei Schlauchfiltern konfiguriert sind, ist vorgesehen, dass bei zwei Aufnahmebehältern jeweils ein Aufnahmebehälter bzw. die darin gelagerten Schlauchfilter mit Innendruck beaufschlagt werden, wohingegen an dem anderen Aufnahmebehälter ein innendruckfreier Austausch der Schlauchfilter möglich ist. Durch den Parallelbetrieb von mehreren Aufnahmebehältern ist ein kontinuierlicher Betrieb der gesamten Vorrichtung möglich, ohne dass durch Rüstzeiten bedingte Stillstände anfallen oder die Blasvorrichtung zum Austausch der Schlauchfilter abgeschaltet werden müsste. Die Stelleinrichtungen zur Umleitung des Luftstroms zum einen oder anderen Aufnahmebehälter kann zusätzlich durch Ventile ergänzt werden, die einer Kupplung zur Festlegung des Schlauchfilters an der Blasvorrichtung vorgeschaltet sind. Hierdurch kann ein Aufnahmebehälter problemlos mit neuen Schlauchfiltern bestückt werden, ohne dass ein Luftstrom den Filtertausch behindert.

Es hat sich als zweckmäßig erwiesen, vor der eigentlichen Nassreinigung durch die Reinigungsdüsen die äußere Oberfläche des verschmutzten Schlauchfilters anzufeuchten. Hierzu ist nach Schutzanspruch 15 eine Brause vorgesehen, die verhindert, dass bei Innendruckbeaufschlagung die auf den Schlauchfiltern abgelagerten Partikel weggeblasen werden, was zu unerwünschter Staubbildung führt. Die Innendruckbeaufschlagung mit dem vollen Innendruck erfolgt daher vorzugsweise erst nach dem Anfeuchten der Schlauchfilter.

Sowohl zum Anfeuchten als auch zum Reinigen der Schlauchfilter kommt als Reinigungsflüssigkeit vorzugsweise Wasser zum Einsatz. Das Wasser kann auf eine Arbeitstemperatur erwärmt sein und gegebenenfalls mit Reinigungsmitteln versetzt sein.

Die gesamte Vorrichtung ist vorzugsweise in einem mobilen Transportcontainer mit genormten Abmaßen untergebracht, in welchem die Vorrichtung, einschließlich der notwendigen Steuer- und Regelungstechnik untergebracht ist (Schutzanspruch 16). Ein solcher Transportcontainer ist nach außen hin mit genormten Anschlüssen für elektrische Energie, die Zuführung von Nutzwasser und die Abführung von Abwasser versehen. Auch ein gegebenenfalls erforderlicher Druckerzeuger zur Druckbeaufschlagung der Reinigungsflüssigkeiten kann in den Transportcontainer integriert sein. Ein solcher Transportcontainer kann durch eine Zwangsbelüftung nach außen hin vollständig gekapselt sein, so dass umweltschädliche Substanzen aussschließlich über den Waschkreislauf aus dem Transportcontainer herausgeführt werden. Eine zusätzliche Umweltbelastung durch den Reinigungsvorgang findet daher nicht statt. Hierzu kann auch eine, dem Eingang des Transportcontainers nachgeschaltete Personalschleuse und/oder Materialschleuse beitragen.

Die Erfindung wird nachfolgend anhand eines in Zeichnungen dargestellten Ausführungsbeispiels näher erläutert. Es zeigen:
- Figur 1: in schematischer Darstellung die erfindungsgemäße Vorrichtung in der Draufsicht innerhalb eines Transportcontainers;
- Figuren 2 und 3: in der Draufsicht und Seitenansicht eine weitere Ausführungsform der Vorrichtung, teilweise geschnitten;
- Figur 4: einen Aufnahmebehälter im Querschnitt mit Blickrichtung in Längsachse der Schlauchfilter;
- Figur 5: den Aufnahmebehälter der Figur 4 in der Seitenansicht, teilweise im Schnitt und
- Figur 6: den Reinigungsschlitten der Figur 4 in Blickrichtung des Pfeils VI der Figur 5.

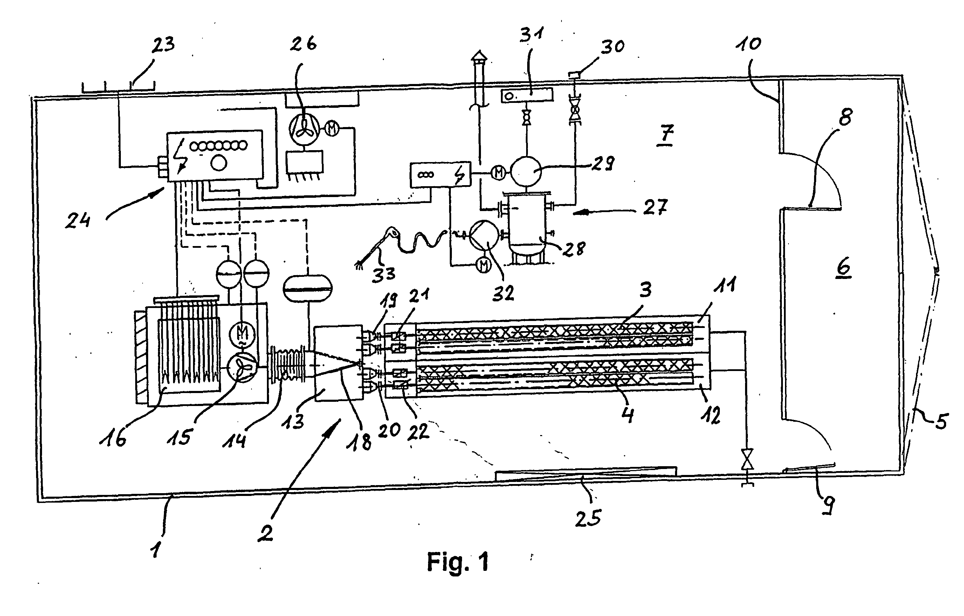

Figur 1 zeigt einen Transportconainer 1, in dem eine Vorrichtung 2 zur Reinigung von Schlauchfiltern 3, 4 aufgenommen ist. Der Transportcontainer 1 ist vorzugsweise ein Standard-Container oder auch General-Purpose-Container mit Türen 5 an einer Stirnseite. Hinter den Türen 5 des Transportcontainers 1 befindet sich ein Schleusenraum 6, durch den der Arbeitsraum 7 von der Umwelt getrennt ist. Durch eine Personalschleuse 8 bzw. eine Materialschleuse 9 in einer Schleusenwand 10 ist der Arbeitsraum 7 begehbar bzw. beschickbar.

Die Vorrichtung 2 innerhalb des Arbeitsraums 7 umfasst zwei parallel zueinander angeordnete Aufnahmebehälter 11, 12, in denen die Schlauchfilter 3, 4 horizontal gelagert sind. Stirnseitig der Aufnahmebehälter 11, 12 ist ein Blaskasten 13 angeordnet, der über einen Leitungsabschnitt 14 mit einem motorisch angetriebenen Gebläse 15 verbunden ist. Dem Gebläse 15 ist eine Heizeinheit 16 vorgeschaltet. Die aus der Heizeinheit 16, dem Gebläse 15, dem Leitungsabschnitt 14 und dem Blaskasten 13 gebildete Baugruppe wird nachfolgend als Blasvorrichtung 17 bezeichnet. Sie dient zur Innendruckbeaufschlagung der Schlauchfilter 3, 4 mit erwärmter Luft. Hierbei wird die Luft auf eine Temperatur über Umgebungslufttemperatur erwärmt, insbesondere auf eine Temperatur von über 40° C, vorzugsweise 40° - 70 ° C. Über eine in dem Blaskasten 13 angeordnete Stelleinrichtung 18 ist der von dem Gebläse 15 ausgehende Luftstrom dem in der Bildebene oberen Aufnahmebehälter 11 bzw. in der mit unterbrochener Linie gezeichneten Stellung dem anderen Aufnahmebehälter 12 zuführbar. Zwischen dem Blaskasten 13 und den Aufnahmebehältern 11, 12 sind Zuleitungen 19, 20 für die erhitzte Luft vorgesehen, die über Ventileinheiten 21, 22 separat absperrbar sind.

Die gesamte Blasvorrichtung 17 ist über eine Steuereinheit 24 steuerbar, die über an der Außenseite des Transportcontainers 1 vorgesehene Anschlüsse mit Energie versorgbar ist. Die Anschlüsse 23 sind genormt, so dass der Transportcontainer 1 an unterschiedlichen Einsatzorten an das jeweilige Versorgungsnetz anschliessbar ist. Der gesamte Transportcontainer 1 ist zwangsbelüftet, wobei Frischluft über eine Luftzufuhr 25 dem Arbeitsraum 7 zugeführt wird und über ein Gebläse 26 wieder aus dem Arbeitsraum 7 abgeführt wird.

In dem Arbeitsraum 7 befindet sich ferner ein stationärer Hochdruckreiniger 27, umfassend einen Vorratskessel 28 mit einem Brenner 29 zum Erhitzen des über einen Anschluß 30 zugeführten Betriebswassers. Der Brenner 29 wird aus einem Kraftstofftank 31 mit Kraftstoff gespeist. An den Vorratskessel 28 ist eine Hochdruckpumpe 32 angeschlossen, durch die das vorgewärmte Betriebswasser über einen Schlauch einer handbetätigten Reinigungslanze 33 zugeführt wird. An den Vorratskessel 28 können in nicht näher dargestellter Weise weitere Verbraucher wie beispielsweise eine Handdusche oder eine Brause angeschlossen sein.

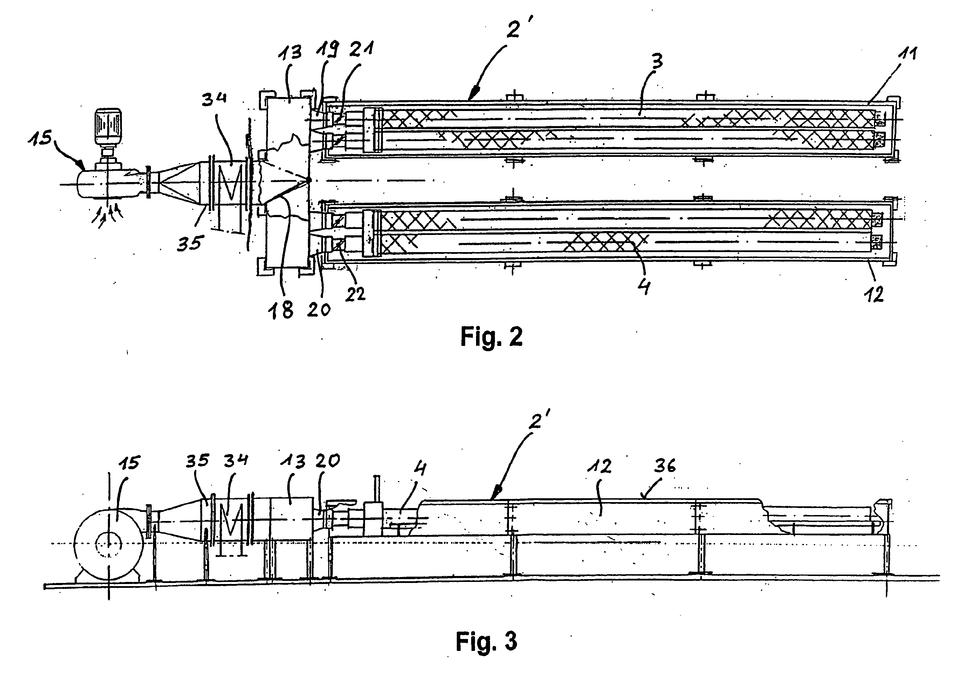

Eine Variante der Vorrichtung ist in den Figuren 2 und 3 dargestellt. Im Unterschied zu der Vorrichtung der Figur 1 ist bei dieser Ausführungsform die Heizeinheit 34 dem Gebläse 15 nicht vorgeschaltet, sondern in den Leitungsabschnitt 35 zwischen Gebläse 15 und Blaskasten 13 eingegliedert. Im übrigen entspricht die Konfiguration der Figuren 2 und 3 derjenigen der Vorrichtung 2 der Figur 1, wobei für gleiche Komponenten die gleichen Bezugszeichen verwendet werden. Aus der Darstellung der Figur 3 wird dabei deutlich, dass die Vorrichtung 2' langgestreckt in der Horizontalen angeordnet ist, wobei je nach Länge der zu reinigenden Schlauchfilter 3, 4 die Aufnahmebehälter einschließlich der Ventileinheiten 21 eine Länge von etwa 7 m besitzen und die gesamte Anordnung sich über mehr als 10 m in der Länge und etwa 2 m in der Breite erstreckt. In diesem Ausführungsbeispiel besitzt jeder Aufnahmebehälter 11, 12 eine Breite von etwa 0,6 m.

Zur einfachen Beschickung der Aufnahmebehälter 11, 12 mit den Schlauchfiltem 3, 4 sind die Aufnahmebehälter 11, 12 aufgebockt, so dass ihre Oberkante 36 in einer Höhe von etwa 90 cm liegt. Damit beim Reinigungsvorgang, beispielsweise in dem Aufnahmebehälter 11, keine Beeinträchtigung durch Spritzwasser oder Verschmutzungen des anderen Aufnahmebehälters 12 auftritt, kann zwischen den Aufnahmebehältern 11, 12 zusätzlich eine nicht näher dargestellte Trennwand angeordnet sein, die sich über die Oberkante 36 des Aufnahmebehälters 12 hinaus streckt. Hier kann beispielsweise eine Höhe von 600 mm ausreichend sein, um den Übertritt von Spritzwasser zu verhindern.

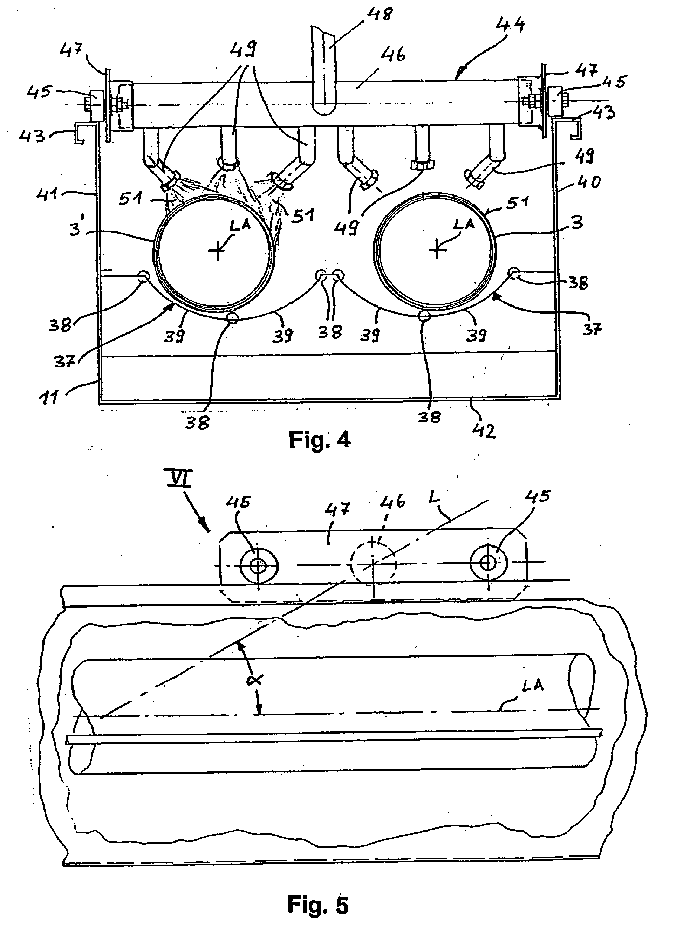

Innerhalb des Aufnahmebehälters 11, 12 liegen die Schlauchfilter 3, 3' auf muldenartig konfigurierten Auflagern 37 auf, die von sich in Richtung der Längsachse LA der Schlauchfilter 3, 3' erstreckenden Stäben 38 gebildet sind (Figur 4). Die Stäbe 38 sind in großzügigem Abstand parallel zueinander angeordnet, so dass sich relativ große Ablauföffnungen 39 zwischen den Stäben 38 ergeben. Hierdurch werden Verstopfungen des Auflagers 37 vermieden.

Aus der Darstellung der Figur 4 wird ferner deutlich, dass der im Schnitt dargestellte Aufnahmebehälter 11 rinnenförmig konfiguriert ist mit zwei, parallel zueinander verlaufenden Seitenwänden 40, 41, die an ihren unteren Enden über einen Boden 42 miteinander verbunden sind. Der Aufnahmebehälter 11 begrenzt einen U-förmigen Innenraum, in dessen mittleren Bereich die Schlauchfilter 3, 3' auf im Übergangsbereich zum unteren Drittel des Aufnahmebehälters 11 plazierten Auflagern 37 gehalten sind. Unterhalb der Auflager 37 wird die Reinigungsflüssigkeit einschließlich der entfernten Verunreinigungen auf dem Boden 42 gesammelt und über einen nicht näher dargestellten Abluß der Entsorgung außerhalb des Transportcontainers 1 zugeführt.

An den oberen Enden der Seitenwände 40, 41 sind Laufschienen 43 angeordnet, auf denen ein in Längsrichtung des Aufnahmebehälters 11 verfahrbarer Reinigungsschlitten 44 aufliegt. Der Reinigungsschlitten 44 besitzt auf jeder den Laufschienen 43 zugewandten Längsseite zwei Laufrollen 45 und einen Querholm 46, der sich im mittleren Bereich zwischen die Laufrollen 45 tragenden Lagerplatten 47 erstreckt. Der Querholm 46 ist innen hohl und mit einer Zuleitung 48 zur Zuführung von Reinigungsflüssigkeit verbunden. Die Reinigungsflüssigkeit tritt hierbei über die Zuleitung 48 in den Querholm 46 ein, an den wiederum auf der der Zuleitung 48 abgewandten Seite Reinigungsdüsen 49 angeschlossen sind.

Für jeweils einen Schlauchfilter 3, 3' sind jeweils drei Reinigungsdüsen 49 vorgesehen. Die Reinigungsdüsen 49 sind derart angeordnet, dass durch die austretenden Reinigungsstrahlen 50 jeweils etwa 1/4 bis 1/3 der äußeren Oberfläche 51 eines jeden Schlauchfilters 3, 3' durch manuelles oder automatisches Verfahren des Reinigungsschlittens 44 in Längsrichtung bearbeitbar ist. Hierzu sind die jeweils äußeren Reinigungsdüsen 49 im Winkel zueinander angeordnet, so dass sich ihre Reinigungsstrahlen 50 mit dem Reinigungsstrahl 50 der mittleren Reinigungsdüse 49 schneiden. Hierdurch wird ein begrenzter Oberflächenbereich der Schlauchfilter 3, 3' einer intensiven Reinigung unterzogen. Anhand der Darstellung der Figur 5 wird verdeutlicht, dass die Reinigungsdüsen 49 nicht im rechten Winkel zur Längsachse LA auf die Schlauchfilter 3, 3' gerichtet sind, sondern dass die Reinigungsstrahlen 50, wie durch die strichpunktierte Linie L verdeutlicht, mit der Längsachse LA einen Winkel α einschließen. Der Winkel beträgt in diesem Ausführungsbeispiel etwa 30°.

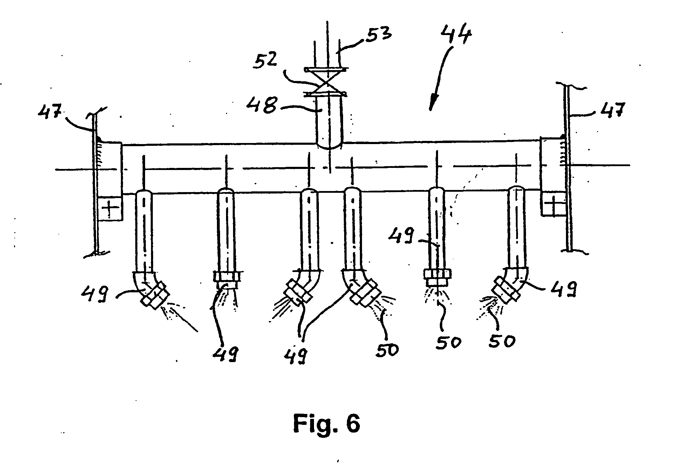

Aus Figur 6 ist erkennbar, dass die Zuleitung 48 ein Absperrventil 52 besitzt, an dem ein flexibler Schlauchabschnitt 53 angeschlossen ist.

### Bezugszeichenaufstellung

- 1 -: Transportcontainer
- 2 -: Vorrichtung
- 2' -: Vorrichtung
- 3 -: Schlauchfilter
- 3' -: Schlauchfilter
- 4 -: Schlauchfilter
- 5 -: Tür v. 1
- 6 -: Schleusenraum v. 1
- 7 -: Arbeitsraum v. 1
- 8 -: Personalschleuse
- 9 -: Materialschleuse
- 10 -: Wand
- 11 -: Aufnahmebehälter
- 12 -: Aufnahmebehälter
- 13 -: Blaskasten
- 14 -: Leitungsabschnitt
- 15 -: Gebläse
- 16 -: Heizeinheit
- 17 -: Blasvorrichtung
- 18 -: Stelleinrichtung
- 19 -: Zuleitung
- 20 -: Zuleitung
- 21 -: Ventileinheit
- 22 -: Ventileinheit
- 23 -: Anschluss
- 24 -: Steuereinheit
- 25 -: Luftzufuhr
- 26 -: Gebläse
- 27 -: Hochdruckreiniger
- 28 -: Vorratskessel
- 29 -: Brenner
- 30 -: Anschluss
- 31 -: Kraftstofftank
- 32 -: Hochdruck-Pumpe
- 33 -: Reinigungslanze
- 34 -: Heizeinheit
- 35 -: Leitungsabschnitt
- 36 -: Oberkante
- 37 -: Auflager
- 38 -: Stab v. 37
- 39 -: Ablauföffnung zw. 38
- 40 -: Seitenwand v. 11
- 41 -: Seitenwand v. 11
- 42 -: Boden v. 11
- 43 -: Laufschienen an 40, 41
- 44 -: Reinigungsschlitten
- 45 -: Laufrollen v. 44
- 46 -: Querholm v. 44
- 47 -: Lagerplatte v. 44
- 48 -: Zuleitung
- 49 -: Reinigungsdüsen
- 50 -: Reinigungsstrahl
- 51 -: äußere Oberfläche
- 52 -: Absperrventil
- 53 -: Schlauchabschnitt

- α-: Winkel
- LA -: Längsachse

## Patentansprüche

1. Vorrichtung zur Reinigung von Schlauchfiltern mit wenigstens einem Aufnahmebehälter (11, 12) zur Lageorientierung mindestens eines von einer Blasvorrichtung (17) insgesamt mit Innendruck beaufschlagten Schlauchfilters (3, 3', 4) sowie einer Anordnung (44, 49) zur äußeren Nassreinigung des Innendruckbeaufschlagten Schlauchfilters (3, 3', 4).

2. Vorrichtung nach Anspruch 1, **dadurch gekennzeichnet, dass** von der Blasvorrichtung (17) in den Schlauchfilter (3, 3', 4) eingeblasene Luft höher als die Umgebungslufttemperatur erhitzt ist.

3. Vorrichtung nach Anspruch 2, **dadurch gekennzeichnet, dass** die Luft eine Temperatur von 20°C bis 70°C besitzt. '

4. Vorrichtung nach Anspruch 1, **dadurch gekennzeichnet, dass** jeder Filterschlauch (3, 3', 4) in dem Aufnahmebehälter (11, 12) horizontal auf einem mit Ablauföffnungen (39) versehen Auflager (37) gelagert ist.

5. Vorrichtung nach Anspruch 4, **dadurch gekennzeichnet, dass** das Auflager (37) von sich in Längsrichtung des Filterschlauchs (3, 3', 4) erstreckenden Stäben (38) gebildet ist.

6. Vorrichtung nach Anspruch 4 oder 5, **dadurch gekennzeichnet, dass** das Auflager (37) im Querschnitt muldenfömig konfiguriert ist.

7. Vorrichtung nach einem der Ansprüche 2 bis 6, **dadurch gekennzeichnet, dass** die Anordnung zur Nassreinigung (44, 49) wenigstens eine gegenüber dem Schlauchfilter (3, 3', 4) relativ beweglich angeordnete und auf dessen äußere Oberfläche (51) gerichtete Reinigungsdüse (49) aufweist, wobei ein aus der Reinigungsdüse (49) austretende Reinigungsstrahl (50) in einem Winkel (α) ungleich 90° zur Längsachse (LA) des Schlauchfilters (3, 3', 4) auf die äußere Oberfläche (51) gerichtet ist.

8. Vorrichtung nach Anspruch 7, **dadurch gekennzeichnet, dass** die Reinigungsdüse (49) an einem in Längsrichtung des Schlauchfilters (3, 3', 4) verfahrbaren Reinigungsschlitten (44) angeordnet ist.

9. Vorrichtung nach Anspruch 7 oder 8, **dadurch gekennzeichnet, dass** die Reinigungsdüsen (49) über den Umfang des Schlauchfilters (3, 3', 4) verteilt angeordnet sind.

10. Vorrichtung nach Anspruch 9, **dadurch gekennzeichnet, dass** die Reinigungsdüsen kreisförmig um einen Schlauchfilter (3, 3', 4) herum angeordnet sind.

11. Vorrichtung nach einem der Ansprüche 8 bis 10, **dadurch gekennzeichnet, dass** an Seitenwänden (40, 41) des Aufnahmebehälters (11) Laufschienen (43) vorgesehen sind, an welchen der Reinigungsschlitten (44) geführt ist.

12. Vorrichtung nach einem der Ansprüche 1 bis 11, **dadurch gekenn-zeichnet**, dass an die Blasvorrichtung (17) wenigstens zwei Schlauchfilter (3, 3', 4) gleichzeitig anschließbar sind, wobei einzelne Schlauchfilter (3, 3', 4) mittels Stetleinrichtungen (18, 21, 22) gezielt mit Innendruck beaufschlagbar sind.

13. Vorrichtung nach Anspruch 12, **dadurch gekennzeichnet, dass** mehrere Aufnahmebehälter (11,12) parallel zueinander angeordnet sind.

14. Vorrichtung nach einem der Ansprüche 1 bis 13, **dadurch gekennzeichnet, dass** jeder Aufnahmebehälter (11, 12) zur Aufnahme von zwei Schlauchfiltern (3, 3', 4) konfiguriert ist.

15. Vorrichtung nach einem der Ansprüche 1 bis 14, **dadurch gekennzeichnet, dass** eine Brause vorgesehen ist, zum außenseitigen Anfeuchten der mit Innendruck beaufschlagten Schlauchfilter (3,3',4).

16. Transportcontainer mit einer Vorrichtung nach einem der Ansprüche 1 bis 15.

## Claims

1. Apparatus for the cleaning of bag filters, with at least one reception container (11, 12) for orienting in position at least one bag filter (3, 3', 4) acted upon, overall, with internal pressure by a blowing device (17), and also with an arrangement (44, 49) for the external wet cleaning of the bag filter (3, 3', 4) acted upon with internal pressure.

2. Apparatus according to Claim 1, **characterized in that** air blown into the bag filter (3, 3', 4) by the blowing device (17) is heated higher than the ambient-air temperature.

3. Apparatus according to Claim 2, **characterized in that** the air possesses a temperature of 20°C to 70°C.

4. Apparatus according to Claim 1, **characterized in that** each filter bag (3, 3', 4) is mounted horizontally in the reception container (11, 12) on a support (37) provided with outflow ports (39).

5. Apparatus according to Claim 4, **characterized in that** the support (37) is formed by bars (38) extending in the longitudinal direction of the filter bag (3, 3', 4).

6. Apparatus according to Claim 4 or 5, **characterized in that** the support (37) has in cross section a trough-shaped configuration.

7. Apparatus according to one of Claims 2 to 6, **characterized in that** the arrangement for wet cleaning (44, 49) has at least one cleaning nozzle (49) arranged relatively movably with respect to the bag filter (3, 3_{'}, 4) and directed onto the outer surface (51) of the latter, a cleaning jet (50) which emerges from the cleaning nozzle (49) being directed onto the outer surface (51) at an angle (α) unequal to 90° with respect to the longitudinal axis (LA) of the bag filter (3, 3', 4).

8. Apparatus according to Claim 7, **characterized in that** the cleaning nozzle (49) is arranged on a cleaning slide (44) movably in the longitudinal direction of the bag filter (3, 3', 4).

9. Apparatus according to Claim 7 or 8, **characterized in that** the cleaning nozzles (49) are arranged, distributed over the circumference of the bag filter (3, 3', 4).

10. Apparatus according to Claim 9, **characterized in that** the cleaning nozzles are arranged circularly around a bag filter (3, 3', 4).

11. Apparatus according to one of Claims 8 to 10, **characterized in that** running rails (43), on which the cleaning slide (44) is guided, are provided on side walls (40, 41) of the reception container (11).

12. Apparatus according to one of Claims 1 to 11, **characterized in that** at least two bag filters (3, 3', 4) are connectable simultaneously to the blowing device (17), individual bag filters (3, 3', 4) being capable of being acted upon with internal pressure in a directed manner by means of actuating devices (18, 21, 22).

13. Apparatus according to Claim 12, **characterized in that** the plurality of reception containers (11, 12) are arranged parallel to one another.

14. Apparatus according to one of Claims 1 to 13, **characterized in that** each reception container (11, 12) is configured for the reception of two bag filters (3, 3', 4).

15. Apparatus according to one of Claims 1 to 14, **characterized in that** a shower is provided for moistening the outside of the bag filters (3, 3', 4) acted upon with internal pressure.

16. Transport container having an apparatus according to one of Claims 1 to 15.

## Revendications

1. Dispositif pour nettoyer des filtres à manche, comportant au moins un réceptacle de logement (11, 12) pour l'orientation en position d'au moins un filtre à manche (3, 3', 4) alimenté dans son ensemble en pression interne par un dispositif de soufflage (17), ainsi qu'un agencement (44, 49) pour le nettoyage extérieur par voie humide du filtre à manche (3, 3', 4) alimenté en pression interne.

2. Dispositif selon la revendication 1, **caractérisé en ce que** l'air soufflé par le dispositif de soufflage (17) dans le filtre à manche (3, 3', 4) est chauffé à une température supérieure à la température de l'air ambiant.

3. Dispositif selon la revendication 2, **caractérisé en ce que** l'air présente une température de 20°C à 70°C.

4. Dispositif selon la revendication 1, **caractérisé en ce que** chaque manche de filtre (3, 3', 4) dans le réceptacle de logement (11, 12) est montée horizontalement sur un support (37) pourvu d'ouvertures de sortie (39).

5. Dispositif selon la revendication 4, **caractérisé en ce que** le support (37) est formé par des barreaux (38) s'étendant en direction longitudinale de la manche de filtre (3, 3', 4).

6. Dispositif selon la revendication 4 ou 5, **caractérisé en ce que** le support (37) est configuré avec une section transversale en forme de creux.

7. Dispositif selon l'une des revendications 2 à 6, **caractérisé en ce que** l'agencement pour le nettoyage par voie humide (44, 49) présente au moins une buse de nettoyage (49) agencée mobile par rapport au filtre à manche (3, 3', 4) et dirigée vers sa surface extérieure (51), un jet de nettoyage (50) sortant de la buse de nettoyage (49) étant dirigé vers la surface extérieure (51) sous un angle (α) différent de 90° par rapport à l'axe longitudinal (LA) du filtre à manche (3, 3', 4).

8. Dispositif selon la revendication 7, **caractérisé en ce que** la buse de nettoyage (49) est agencée sur un chariot de nettoyage (44) mobile en direction longitudinale du filtre à manche (3, 3', 4).

9. Dispositif selon la revendication 7 ou 8, **caractérisé en ce que** les buses de nettoyage (49) sont agencées de manière répartie sur la périphérie du filtre à manche (3, 3', 4).

10. Dispositif selon la revendication 9, **caractérisé en ce que** les buses de nettoyage sont agencées de manière circulaire autour d'un filtre à manche (3, 3', 4).

11. Dispositif selon l'une des revendications 8 à 10, **caractérisé en ce que** des rails de circulation (43) sont prévus sur des parois latérales (40,41) du réceptacle de logement (11), sur lesquels est guidé le chariot de nettoyage (44).

12. Dispositif selon l'une des revendications 1 à 11, **caractérisé en ce qu'**au dispositif de soufflage (17) peuvent venir se raccorder simultanément au moins deux filtres à manche (3, 3', 4), les filtres à manche individuels (3, 3', 4) pouvant être alimentés de façon ciblée en pression interne au moyen de dispositifs de réglage (18, 21, 22).

13. Dispositif selon la revendication 12, **caractérisé en ce que** plusieurs réceptacles de logement (11, 12) sont agencés parallèlement les uns aux autres.

14. Dispositif selon l'une des revendications 1 à 13, **caractérisé en ce que** chaque réceptacle de logement (11, 12) est configuré pour loger deux filtres à manche (3, 3', 4).

15. Dispositif selon l'une des revendications 1 à 14, **caractérisé en ce qu'**il est prévue un système d'arrosage pour humecter du côté extérieur les filtres à manche (3, 3', 4) alimentés en pression interne.

16. Conteneur de transport comportant un dispositif selon l'une des revendications 1 à 15.
